# EUROPEAN PATENT APPLICATION

(11) **EP 0 862 337 A2**
(43) Date of publication of application: **02.09.1998**
(21) Application number: 98301382.2
(22) Date of filing: 25.02.1998
(51) Int. Cl.: H04N 9/83

(54) **PAL pulse generator and chroma signal recording circuit**

(30) Priority: 27.02.1997 JP 44056/97
(71) Applicant: SANYO ELECTRIC Co., Ltd., Moriguchi-shi, Osaka 570 (JP)
(72) Inventor: Iizuka, Hiroshi, Oura-gun, Gunma (JP)
(74) Representative: Cross, Rupert Edward Blount

(57) **Abstract**

A PAL pulse generating circuit has a voltage control oscillator (12) which oscillates in synchronization with the phase of a burst signal in a PAL recording chroma signal, an ID detection circuit (23) which detects a phase difference between the oscillation output signal of the voltage control oscillator and the burst signal, a frequency divider circuit (24) which divides the frequency of a horizontal synchronizing signal, and a selecting circuit (26) which selectively outputs a plurality of output signals of the frequency divider circuit according to the detection output signal of the ID detection circuit. Thus, the PAL pulse can be produced within an IC.

## Description

### BACKGROUND OF THE INVENTION

### FIELD OF THE INVENTION

The invention relates to a PAL pulse generator for a PAL type home VCR, to a chroma signal recording circuit comprising such a PAL pulse generator, and more particularly to a chroma signal recording circuit which has an improved APC (automatic phase control) loop built therein and improved PM (phase modulation) and AM (amplitude modulation) characteristics of a chroma signal to be recorded.

### DESCRIPTION OF THE RELATED ART

A PAL TV broadcast signal inverts an R-Y component of a color difference signal every 1H (horizontal synchronizing signal period), making it difficult to visually detect distortion of a signal generated in a transmission system. A burst signal has the phase switched to +45 degrees and -45 degrees every 1H to identify the polarity of the R-Y component.

Home VCRs record a video signal with the frequency of a chroma signal transformed. Transformation of the frequency requires a VXO (voltage controlling oscillator having quartz as the oscillator) which oscillates in synchronization with the phase of the burst signal in the recorded chroma signal. The VXO must synchronize phase with the burst signal which inverts every 1H in order to record a PAL TV broadcast signal.

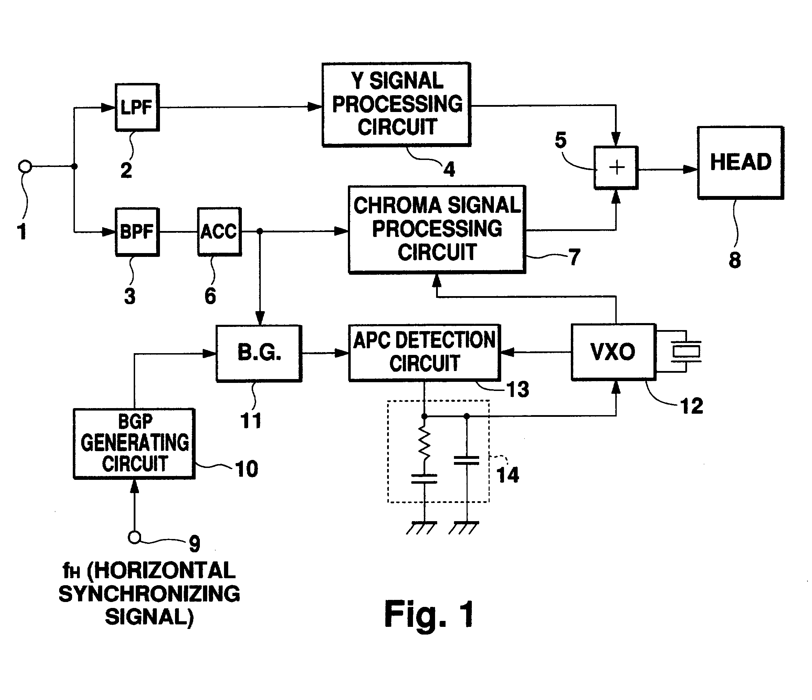

Fig. 1 shows a circuit for recording such a PAL video signal. The PAL video signal is supplied to an input terminal 1 in Fig. 1. An LPF 2 extracts only a luminance signal component from the video signal, while a BPF 3 extracts only a chroma signal component (color signal component) from the video signal.

The luminance signal component from the LPF 2 is subjected to FM and other modulation required for recording by a luminance signal processing circuit 4. The output signal from the luminance signal processing circuit 4 is applied to an adder circuit 5.

The chroma signal component from the BPF 3 is adjusted to a given level by an ACC circuit 6. The output signal from the ACC circuit 6 is subjected to frequency conversion or the like required for recording by a chroma signal processing circuit 7. The output signal from the chroma signal processing circuit 7 is also applied to the adder circuit 5 and added to the output signal from the luminance signal processing circuit 4. The resulting signal is supplied to VCR head 8.

The operation of an APC loop within the chroma signal processing circuit 7 will next be described. A horizontal synchronizing signal is applied from the luminance signal processing circuit 4 to a terminal 9. A BGP (burst gate pulse) generating circuit 10 generates a BGP according to the horizontal synchronizing signal. The chroma signal is applied from the ACC circuit 6 to a burst gate circuit 11 to generate an output signal for only a BGP period during which the BGP is applied.

Accordingly, a burst signal is generated from the burst gate circuit 11 in a cycle of 1H.

Meanwhile, a VXO 12 oscillates at a burst signal frequency and applies a continuous wave to an APC detection circuit 13. The APC detection circuit 13 generates a detection output signal only when it receives the burst signal. The detection output signal is smoothed and converted to a DC voltage by a smoothing circuit 14 and applied to the VXO 12. The VXO 12 then oscillates in synchronization with the phase of the burst signal to be recorded. The oscillation output signal of the VXO 12 can thereby be used for the frequency conversion by the chroma signal processing circuit 7.

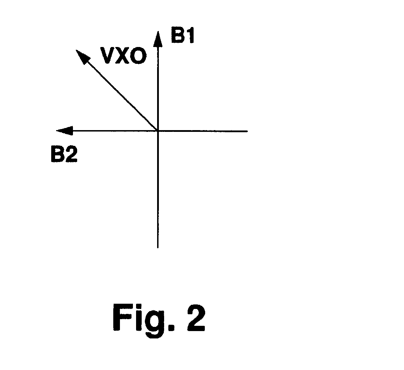

The VXO 12 shown in Fig. 1 is controlled by an average value of the detection output signals over an extended period by the smoothing circuit 14. Fig. 2 is a vector diagram showing the phase relationship between the oscillation output signal of the VXO 12 in a stable state and the burst signal from the burst gate circuit 11. In Fig. 2, B1 and B2 denote first and second burst signals, respectively. B1 and B2 are applied to the APC detection circuit 13 every 1H. Meanwhile, the oscillation output signal (VXO) of the VXO 12, which is a single continuous wave, is finally positioned in the phase at the midpoint between B1 and B2 as a result of the APC's operation.

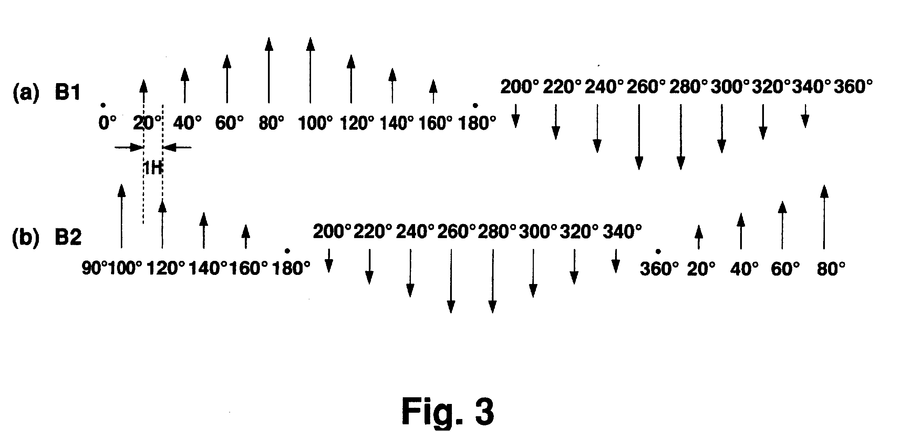

Fig. 3 shows vectors of APC error output signals of B1 and B2 with time given on the horizontal axis. A (a) in Fig. 3 indicates B1 and a (b) in Fig. 3 indicates B2. It is assumed that the initial phase of the oscillation output signal of the VXO 12 coincides with that of B1 and shifts by 10 degrees every 1H because of a frequency difference. A first signal B1 has a phase difference of zero degree with respect to the oscillation output signal. B2 comes in the next 1H, and has a phase difference of 90+10, or 100 degrees. B1 then comes in the next 1H, and it has a phase difference of 0+20, or 20 degrees. The next phase difference becomes 90 degrees + 30 degrees equal to 120 degrees. Thus, the APC error output signal is indicated as the vectors of (a) and (b) in Fig. 3. The vectors of (a) and (b) in Fig. 3 are added by the smoothing circuit 14 to control the oscillation output signal of the VXO 12 by the average value.

However, when the vectors of (a) and (b) in Fig. 3 are used for control, there is a disadvantage that PM (phase modulation) and AM (amplitude modulation) characteristics of the record chroma signal are degraded because the VXO 12 is controlled on the phase axis different by 90 degrees every 1H.

Some home VCRs may include an OSD (on-screen display), indicating "REC" or the like for display on a TV receiver. To make such indication, it is necessary to inform an IC for OSD whether the cycle of a signal to be indicated is B1 or B2, and such a pulse is called a "PAL pulse". The PAL pulse is prepared according to the detection output signal of the APC detection circuit 13.

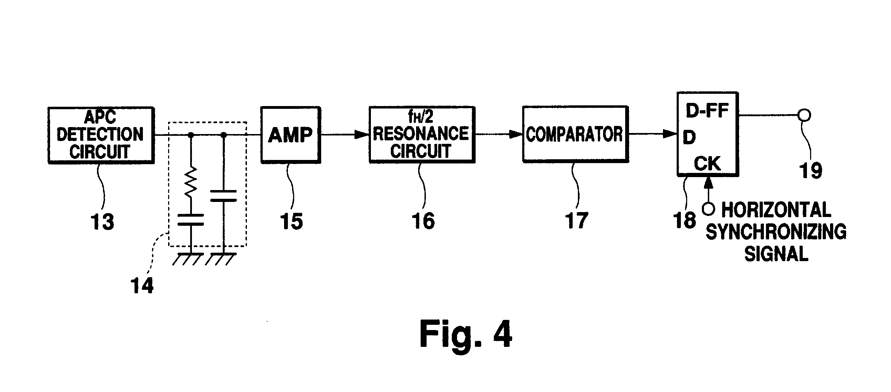

Fig. 4 shows a PAL pulse generator. The detection output signal of the APC detection circuit 13 is amplified by an amplifier 15, and an fH/2 resonance circuit 16 causes resonance of the signal of a frequency fH/2 with respect to the frequency fH of the horizontal synchronizing signal.

The resonance signal of the frequency fH/2 is generated at an output terminal 19 through a comparator 17 and a D-FF (D type flip-flop) 18. Accordingly, a PAL pulse is obtained at the output terminal 19 by the PAL pulse generator shown in Fig. 4.

However, the PAL pulse generator of Fig. 4 has a significant disadvantage that it can not be suitably reduced to be an IC, because the fH/2 resonance circuit 16 includes a coil and a capacitor. Accordingly, an IC PAL pulse generator is greatly desired.

### SUMMARY OF THE INVENTION

The invention can be applied to a PAL video signal processing device, and aims to make it possible to generate a PAL pulse in an IC and also to improve PM and AM characteristics of a chroma signal to be recorded.

To achieve the objects described above, the invention relates to a PAL pulse generating circuit for generating a PAL pulse to identify the inversion of a phase of a burst signal contained in a chroma signal of a PAL video signal at each horizontal synchronization period, wherein an ID detection circuit detects a phase difference between the burst signal and an oscillation output signal obtained when a voltage control oscillator oscillates in synchronization with the phase of the burst signal in the video signal, and a PAL pulse is generated according to the obtained detection output signal and a horizontal synchronizing signal.

In one aspect, a PAL pulse generating circuit of the present invention comprises a frequency divider circuit for dividing the frequency of the horizontal synchronizing signal; and a selecting circuit for selectively outputting a plurality of output signals from the frequency divider circuit according to the detection output signal of the ID detection circuit. A PAL pulse is outputted from the selecting circuit.

Configuring the PAL pulse generating circuit as described above eliminates a resonance circuit or the like and facilitates making the PAL pulse generating circuit into an IC.

According to another aspect of the invention, the oscillation output signal output from the voltage control oscillator is subjected to phase shift by a phase shift circuit according to respective phases of multiple burst signals having different phases, any of the oscillation output signals of different phases from the phase shift circuit is selected according to the PAL pulse from the PAL pulse generating circuit of the invention, the phase of the selected oscillation output signal is compared with that of the burst signal contained in the PAL video signal, and the voltage control oscillator is controlled according to the phase difference obtained.

Another aspect of the present invention relates to a chroma signal recording circuit which oscillates a voltage control oscillator in synchronization with the phase of a burst signal contained in a chroma signal of a PAL video signal and records the chroma signal according to an oscillation output signal of the voltage control oscillator, and which comprises a burst gate circuit which extracts the burst signal from the chroma signal of the video signal; a voltage control oscillator which oscillates with a frequency an integral multiple of the frequency of the burst signal as a central frequency; a phase shift circuit which shifts the phase of an output signal from the voltage control oscillator and generates two oscillation output signals having a phase difference of 90 degrees; a switch for selectively switching between the two oscillation output signals of the phase shaft circuit; an APC detection circuit which compares the phase of the oscillation output signal output from the switch with that of the burst signal output from the burst gate circuit, and controls an oscillation frequency in the voltage control oscillator according to the phase difference obtained; a control circuit which generates the output signal from the APC detection circuit in a cycle of two horizontal synchronizing signals; and an ID detection circuit which detects a phase difference between the oscillation output signal output from the switch and the burst signal output from the burst gate circuit. The control circuit is controlled according to the detection output signal from the ID detection circuit.

Thus, in an APC loop, the oscillation output signal of the voltage control oscillator undergoes phase shift according to the phase of the burst signal, a plurality of oscillation output signals obtained by the phase shift are selected to compare with the burst signal for the phases, and the oscillation output signal and the burst signal can be compared continuously for the phases on the same vector axis. In such a way a system which records the chroma signal with its frequency converted based on the oscillation output signal outputted from the voltage control oscillator can improve PM and AM characteristics of the chroma signal to be recorded.

The invention can select the plurality of oscillation output signals obtained by performing the phase shift by the PAL pulse from the PAL pulse generating circuit, which can easily be made into an IC.

The present invention can also be configured to control so that the burst gate pulse from the burst gate pulse generating circuit is applied to the burst gate circuit in a cycle of two horizontal synchronizing signals according to the detection output signal from the ID detection circuit. The burst gate pulse is easily applied to the burst gate circuit in the cycle of two horizontal synchronizing signals by using the PAL pulse. By applying the burst gate pulse to the burst gate circuit in the cycle of two horizontal synchronizing signals, the burst signal in the cycle of two horizontal synchronizing signals, namely the burst signal in the same phase, is applied to the APC detection circuit. Therefore, the APC detection circuit compares the burst signal of the same phase and the oscillation output signal from the voltage control oscillator to control the voltage control oscillator, so that the PM and AM characteristics of the chroma signal to be recorded can be improved by a simple configuration.

### BRIEF DESCRIPTION OF THE DRAWINGS

Fig. 1 is a circuit diagram showing a conventional chroma signal memory circuit.

Fig. 2 is a vector diagram showing the phase relationship between an oscillation output signal of VXO and a burst signal of a burst gate circuit in the circuit shown in Fig. 1.

Fig. 3 is a vector diagram showing an APC error output signal with respect to first and second burst signals.

Fig. 4 is a circuit diagram showing a typical PAL pulse generator.

Fig. 5 is a circuit diagram showing a chroma signal recording circuit according to an embodiment of the invention.

Fig. 6 is a diagram showing signal waveforms in the circuit shown in Fig. 5.

Fig. 7 is a vector diagram showing the phase relationship between an oscillation output signal of VXO and a burst signal of a burst gate circuit according to an embodiment of the invention.

Fig. 8 is a circuit diagram showing the configuration of an APC detection circuit 22 shown in Fig. 5.

Fig. 9 is a circuit diagram showing the configuration of an ID detection circuit 23 shown in Fig. 5.

### DESCRIPTION OF THE PREFERRED EMBODIMENT

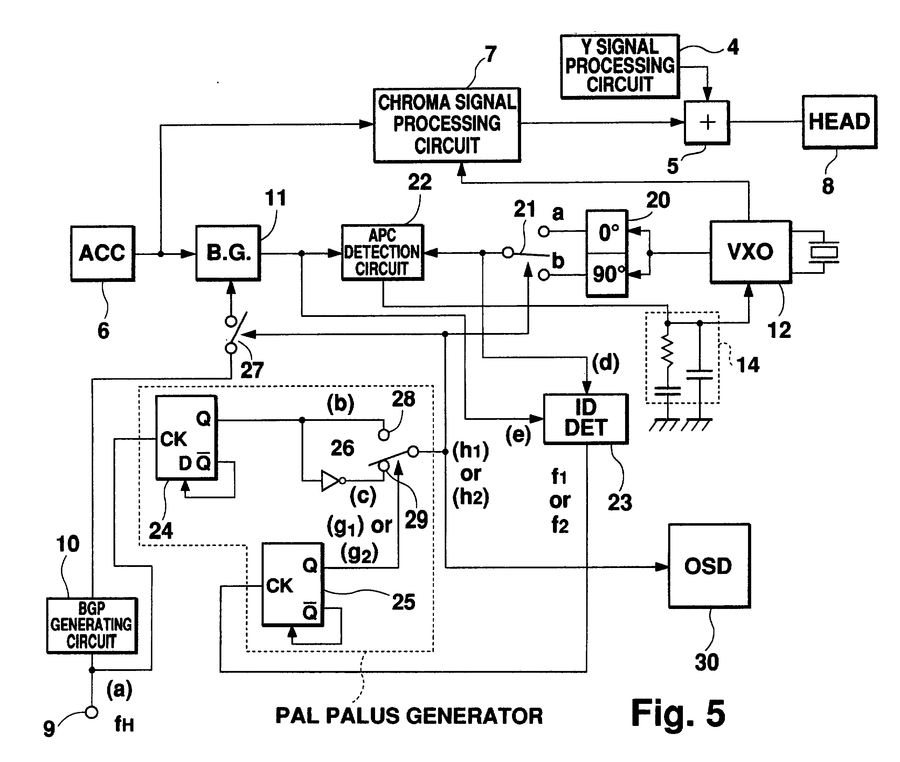

Fig. 5 shows a chroma signal recording circuit according to a preferred embodiment of the invention. In Fig. 5, a phase shifter 20 shifts the phase of an oscillation output signal of a voltage control oscillator 12 to generate two oscillation output signals having a phase difference of 90 degrees. A first switch 21 selectively changes between two oscillation output signals of the phase shifter circuit 20. An APC detection circuit 22 performs the phase comparison between the oscillation output signal from the first switch 21 and the burst signal from the burst gate circuit 11 and controls the oscillation frequency of the voltage control oscillator 12 according to the obtained phase difference. An ID detection circuit 23 detects a phase difference between the oscillation output signal from the first switch 21 and the burst signal from the burst gate circuit 11. D-FF 24 operates as a frequency dividing circuit for dividing the frequency of the horizontal synchronizing signal, while D-FF 25 operates as a holding circuit for holding the output signal from the ID detection circuit 23. A selecting circuit 26 selectively outputs the output from the D-FF and inversion signals according to the output signal from the D-FF 25, and a second switch 27 operates to have the burst gate pulse from a BGP generator circuit 10 applied to the burst gate circuit 11 in two horizontal synchronizing signal cycles. A frequency divider is required between the VXO 12 and the phase shifter circuit 20, but not shown in Fig. 5. The PAL pulse generator comprises the D-FF's 24, 25 and the selecting circuit 26.

It is to be understood that the same reference numerals are used to designate corresponding parts in Fig. 1 and Fig. 5, and their description is not repeated.

In this embodiment of the invention, the output signal from the VXO 12 is subjected to 0° and 90° phase shifts in the same way as the arriving burst signal. The phases of the phase-shifted signal and the burst signal are compared so to allow continuous phase comparison on the same axis. The phase of the output signal of the VXO 12 can be aligned with the phase of the burst signal by the phase shifter circuit 20 of Fig. 5. Matching of these phases leads to stabilization of the detection output signal of the APC detection circuit 22 and prevents the PM and AM characteristics of the record chroma signal from degrading.

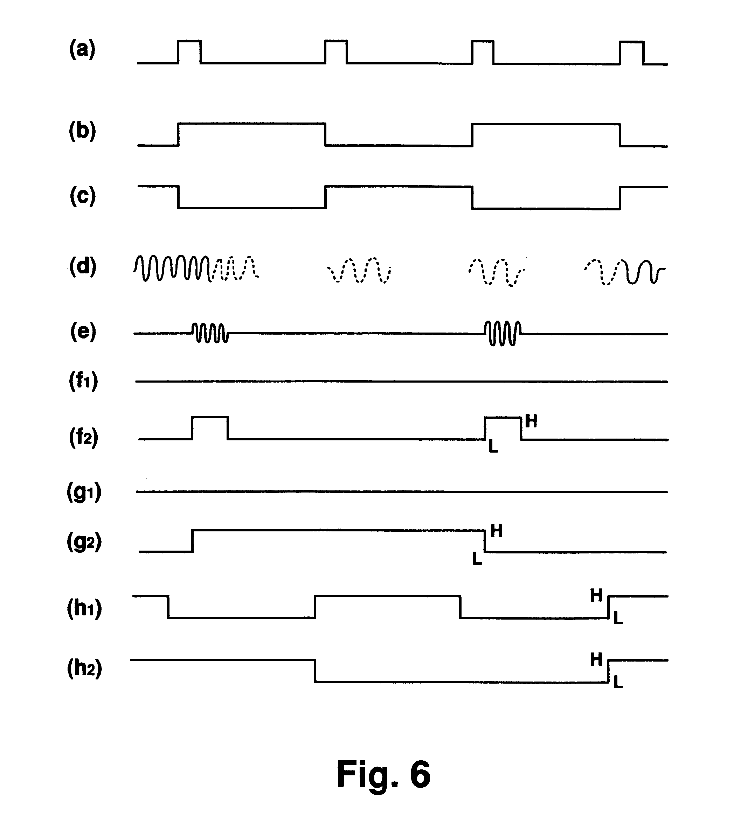

Specifically, the first switch 21 in the initial state is switched to either terminal a or b in Fig. 5. The waveform of a signal output from the first switch 21 is shown in Fig. 6 (d). The signal shown in Fig. 6 (d) is a continuous wave of a frequency fsc and applied to the ID detection circuit 23. Meanwhile, the burst signal of Fig. 6 (e) from the burst gate circuit 11 is applied to the ID detection circuit 23. The ID detection circuit 23 generates a signal at level H [Fig. 6 (f2)] if the two signals have their phases shifted by 90 degrees and a signal at a level L [Fig. 6 (f1)] if they have the same phase. The ID detection circuit 23 has a response sensitivity which is set higher than those of the APC detection circuit 22 and the smoothing circuit 14.

The horizontal synchronizing signal shown in Fig. 6 (a) from a terminal 9 is applied to the D-FF 24, then the signal of Fig. 6 (b) is generated at a terminal 28 and the signal of Fig. 6 (c) is generated at a terminal 29.

It is assumed that the ID detection circuit 23 is generating a signal at a level L (Fig. 6 (fl)) with the phase matched. Then, the output signal of the D-FF 25 is as shown in Fig. 6 (gl). The selecting circuit 26 continues to select the output from the terminal 29 as shown in Fig. 5, so that the selecting circuit 26 generates the signal of Fig. 6 (h1) (Fig. 6 (c)). This signal is the PAL pulse. The PAL pulse is sent as pulse to send burst information to an OSD circuit 30. The PAL pulse is also used as the switching signal of the first switch 21. Since the burst signal and the output signal from the first switch 21 are in phase, the change-over timing of the terminals a, b of the first switch 21 is not changed, and the terminals a, b are alternately selected every 1H, while the output signal from the VXO 12 with a 0° or 90° phase shift is applied to the APC detection circuit 22.

It is assumed that the burst signal and the output signal from the first switch 21 are out of phase and the ID detection circuit 23 generates a signal at a level H [Fig. 6 (f2)]. Then, the output signal from the D-FF 25 has a level H as shown in Fig. 6 (g2). In this level H period, the selecting circuit 26 is switched from the illustrated state to the terminal 28, and the signal of Fig. 6 (h2) is generated from the selecting circuit 26. This generated signal is a PAL pulse, which is also transmitted as a pulse to send burst information to the OSD circuit 30. The PAL pulse controls the switching timing of the first switch 21 according to Fig. 6 (h2). In this case, terminal a or b is continuously selected. Therefore, even if the burst signal and the output signal from the first switch 21 are out of phase, the switching timing of the first switch 21 is controlled so that they become in phase. The output signal of the phase shifter circuit 20 can be always detected for the phase on the same phase axis as two types of burst signals.

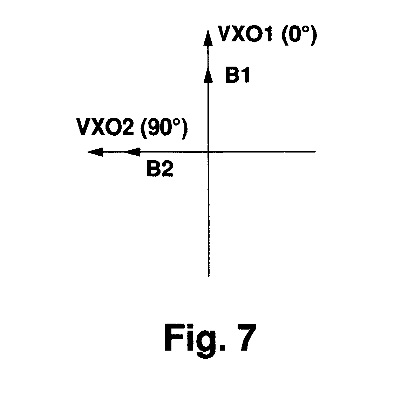

The situation will be described with reference to Fig. 7. The phase relationship between two oscillation output signals VXO1, VXO2 of the VXO 12, and burst signals B1, B2 from the burst gate circuit 11 is shown in a vector diagram of Fig. 7. B1 in Fig. 7 denotes a first burst signal and B2 a second burst signal. B1 and B2 are applied to the APC detection circuit 22 every 1H. The oscillation output signals VXO1, VXO2 of the VXO 12 are also applied by the phase shifter circuit 20 with a 90° phase shift every 1H. Thus, these signals are out of phase with each other by 90 degrees. A state where these signals become in phase is shown in Fig. 7.

In this state, the APC detection circuit 22 does not generate any signal causing AM and PM components.

The PAL pulse can also be used to control BGP. BGP from the BGP generator circuit 10 is generally applied to the burst gate circuit 11 in a cycle of 1H, but may also be applied in a cycle of 2H by using the PAL pulse for the change-over of the second switch 27. In this case, the first switch 21 is selected to either of the terminal a or b by the PAL pulse in a cycle of 2H so that the oscillation output signal of the phase corresponding to the burst signal is obtained.

Specifically, BGP is applied to the burst gate circuit 11 in a cycle of 2H by switching the second switch 27 in a cycle of the pulse periods "H" and "L" of Fig. 6 (h1).

Thus, according to the circuit shown in Fig. 5, the signal after the phase shift of the output signal of the VXO 12 and the burst signal can be compared continuously for the phases on the same axis and the PAL pulse can also be produced in the IC. Accordingly, the circuit of Fig. 5 can be made into an IC without a large-capacitance capacitor or an oscillator.

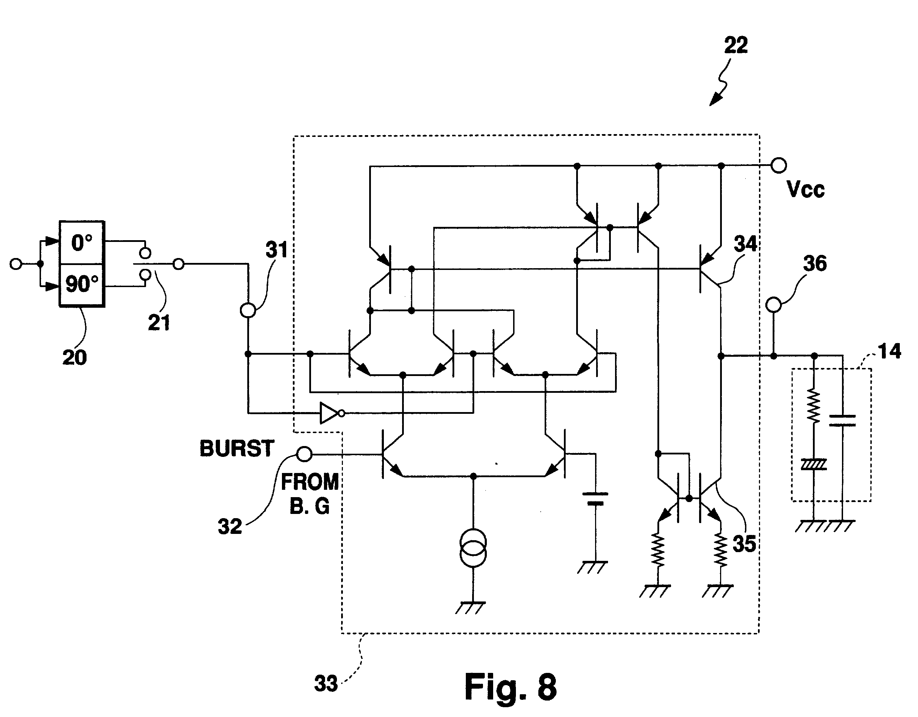

Fig. 8 shows a specific embodiment of the APC detection circuit 22. The oscillation output signal from the first switch 21 is applied to a terminal 31. The burst signal from the burst gate circuit 11 is applied to a terminal 32. These signals are compared for the phases by a phase comparator 33. When these signals have a phase difference of 90 degrees, transistors 34, 35 have an equal collector current and keep the previous value. This state is a phase matching state.

If the phase difference of these signals deviates from 90 degrees, the transistors 34, 35 have an equal collector current, and the smoothing circuit 14 is recharged or discharged. Accordingly, a terminal 36 obtains a voltage corresponding to the phase difference.

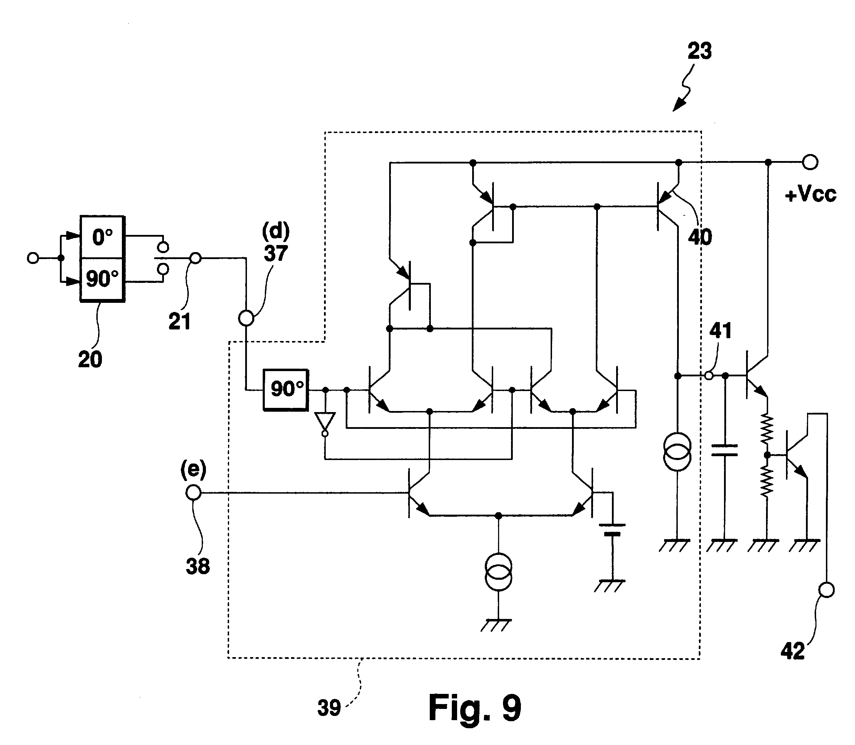

Fig. 9 shows a specific embodiment of the ID detection circuit 23. The oscillation output signal from the first switch 21 is applied to a terminal 37. The burst signal from the burst gate circuit 11 is applied to a terminal 38. These signals are compared for the phases by a phase comparator 39. When the signals at the terminals 37, 38 have a phase difference of 90 degrees, a maximum current flows to a transistor 40, and a terminal 41 becomes level H. If the phase difference of these signals deviates from 90 degrees, the voltage of the terminal 41 drops to level L. Because of this level change, the ID signal obtained at a terminal 42 is level L by the phase matching and level H by the phase mismatch.

## Claims

1. A PAL pulse generating circuit for generating a PAL pulse to identify the inversion of a phase of a burst signal contained in a chroma signal of a PAL video signal every single horizontal synchronization period, wherein:
an ID detection circuit detects a phase difference between the burst signal and an oscillation output signal obtained when a voltage control oscillator oscillates in synchronization with the phase of the burst signal in the video signal, and
a PAL pulse is generated according to an obtained detection output signal of the ID detection circuit and a horizontal synchronizing signal.

2. The PAL pulse generating circuit according to claim 1, further comprising:
a frequency divider circuit for dividing the frequency of the horizontal synchronizing signal; and
a selecting circuit for selectively outputting a plurality of output signals from the frequency divider circuit according to the detection output signal of the ID detection circuit, and for outputting the PAL pulse.

3. The PAL pulse generating circuit according to claim 1 or 2, wherein:
the oscillation output signal output from the voltage control oscillator is subjected to phase shift by a phase shift circuit according to respective phases of multiple kinds of burst signals having different phases, any of the oscillation output signals with different phases from the phase shift circuit is selected according to the PAL pulse;
the phase of the selected oscillation output signal is compared with that of the burst signal contained in the PAL video signal; and
the voltage control oscillator is controlled according to the phase difference obtained.

4. A chroma signal recording circuit which oscillates a voltage control oscillator in synchronization with the phase of a burst signal contained in a chroma signal of a PAL video signal and records the chroma signal according to an oscillation output signal of the voltage control oscillator, comprising:
a burst gate circuit which extracts the burst signal from the chroma signal of the video signal;
a voltage control oscillator which oscillates with a frequency that is an integral multiple of the frequency of the burst signal as a central frequency;
a phase shift circuit which shifts the phase of an output signal from the voltage control oscillator and generates two oscillation output signals having a phase difference of 90 degrees;
a switch which selectively switches between the two oscillation output signals of the phase shaft circuit;
an APC detection circuit which compares the phase of the oscillation output signal outputted from the switch with that of the burst signal outputted from the burst gate circuit, and controls an oscillation frequency in the voltage control oscillator according to the phase difference obtained;
a control circuit which generates the output signal from the APC detection circuit in a cycle of two horizontal synchronizing signals; and
an ID detection circuit which detects a phase difference between the oscillation output signal outputted from the switch and the burst signal output from the burst gate circuit; and wherein:
the control circuit is controlled according to the detection output signal from the ID detection circuit.

5. The chroma signal recording circuit according to claim 4, further comprising:
a PAL pulse generating circuit which generates a PAL pulse to identify the inversion of a phase of the burst signal contained in the chroma signal every single horizontal synchronization period; wherein:
the PAL pulse generating circuit generates the PAL pulse according to the detection output signal from the ID detection circuit and the horizontal synchronizing signal; and
the control circuit is controlled by the PAL pulse.

6. A chroma signal recording circuit which oscillates a voltage control oscillator in synchronization with the phase of a burst signal contained in a chroma signal of a PAL video signal and records the chroma signal according to an oscillation output signal of the voltage control oscillator, comprising:
a burst gate circuit which extracts the burst signal from the chroma signal of the video signal;
a voltage control oscillator which oscillates with a frequency that is an integral multiple of the frequency of the burst signal as a central frequency;
a phase shift circuit which shifts the phase of an output signal from the voltage control oscillator and generates two oscillation output signals having a phase difference of 90 degrees;
a first switch which selectively switches between the two oscillation output signals of the phase shift circuit;
an APC detection circuit which compares the phase of either one of the two oscillation output signal output from the first switch with that of the burst signal output from the burst gate circuit, and controls an oscillation frequency in the voltage control oscillator according to the phase difference obtained;
a control circuit which controls to generate the output signal from the APC detection circuit in a cycle of two horizontal synchronizing signals; and
an ID detection circuit which detects a phase difference between either one of the oscillation output signal outputted from the first switch and the burst signal outputted from the burst gate circuit;
a burst gate pulse generating circuit which supplies a burst gate pulse to the burst gate circuit for burst signal extraction processing by the burst gate circuit; and
a second switch which controls application of the burst gate pulse from the burst gate pulse generating circuit to the burst gate circuit in a cycle of two horizontal synchronizing signals according to the detection output signal from the ID detection circuit.

7. The chroma signal recording circuit according to claim 6, further comprising:
a PAL pulse generating circuit which generates a PAL pulse to identify the inversion of a phase of the burst signal contained in the chroma signal every single horizontal synchronization period; wherein:
the PAL pulse generating circuit generates the PAL pulse according to the detection output signal from the ID detection circuit and the horizontal synchronizing signal; and
the second switch is controlled by the PAL pulse.
